(19) Europäisches Patentamt
European Patent Office
Office européen des brevets

(11) Veröffentlichungsnummer : **0 075 202**
**B1**

(12) # EUROPÄISCHE PATENTSCHRIFT

(45) Veröffentlichungstag der Patentschrift : **19.12.84**

(51) Int. Cl.³ : **C 09 B 23/14**// D06P1/42

(21) Anmeldenummer : **82108286.4**

(22) Anmeldetag : **09.09.82**

(54) **Farbstoffe für Druckfarben.**

(30) Priorität : **17.09.81 DE 3136892**

(43) Veröffentlichungstag der Anmeldung : **30.03.83 Patentblatt 83/13**

(45) Bekanntmachung des Hinweises auf die Patenterteilung : **19.12.84 Patentblatt 84/51**

(84) Benannte Vertragsstaaten : **CH DE FR GB IT LI**

(56) Entgegenhaltungen :
**EP-A- 0 019 997**
**US-A- 3 742 012**
**US-A- 4 017 486**

(73) Patentinhaber : **BASF Aktiengesellschaft**
**Carl-Bosch-Strasse 38**
**D-6700 Ludwigshafen (DE)**

(72) Erfinder : **Degen, Hans-Juergen, Dr.**
**Schillerstrasse 6**
**D-6143 Lorsch (DE)**
Erfinder : **Grychtol, Klaus, Dr.**
**Seebacher Strasse 96A**
**D-6702 Bad Duerheim (DE)**
Erfinder : **Eisert, Manfred, Dr.**
**Londoner Ring 59**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 075 202 B1

**Beschreibung**

Die Erfindung betrifft die Verwendung von Verbindungen der allgemeinen Formel I

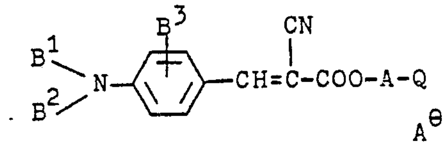 (I)

in der

$B^1$ und $B^2$ unabhängig voneinander gegebenenfalls substituierte Alkylreste,
$B^3$ Wasserstoff, Methyl, Ethyl, Methoxy, Ethoxy oder Chlor,
A einen Alkylenrest,
$A^{\ominus}$ ein Anion und
Q einen quaternierten stickstoffhaltigen Rest bedeuten, in Druckfarben, insbesondere Flexodruckfarben.

Die Reste $B^1$ und $B^2$ können z. B. durch $C_1$- bis $C_4$-Alkoxy, Di-$C_1$- bis $C_4$-alkylamino, Chlor, Cyan oder Phenyl substituiert sein, ferner können sie zusammen mit dem Stickstoff, an den sie gebunden sind, einen gesättigten fünf- bis siebengliedrigen Ring bilden.

Einzelne Reste $B^1$ und $B^2$ sind beispielsweise $C_2H_4OCH_3$, $C_2H_4OC_2H_5$, $C_2H_4OC_3H_7$, $C_2H_4OC_4H_9$, $C_3H_6OCH_3$, $C_3H_6OC_2H_5$, $C_2H_4Cl$, $C_2H_4CN$, $C_3H_7$, $C_4H_9$, $C_6H_{13}$, $C_8H_{17}$,

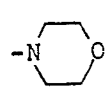 , 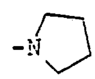 , 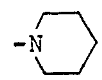 , 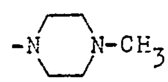 oder 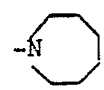

und vorzugsweise $CH_3$, $C_2H_5$ oder $CH_2C_6H_5$.

Alkylenreste A sind z. B. $-CH_2CH_2-$, $-CH_2CH_2CH_2-$, $-CH_2\underset{|}{C}HCH_3$, $-CH_2\underset{|}{C}HC_2H_5$, $-CH_2\underset{|}{C}HCH_2OB^4$ oder $-CH_2\underset{OB^4}{\underset{|}{C}}HCH_2-$, wobei $-CH_2CH_2-$ und $-CH_2\underset{|}{C}H-CH_3$ bevorzugt sind und $B^4$ Acetyl ist.

Reste Q leiten sich beispielsweise von tertiären Aminen oder Stickstoffheterocyclen ab.

Einzelne Reste Q sind beispielsweise

$-\overset{\oplus}{N}(CH_3$, $-\overset{\oplus}{N}(C_2H_5)_3$, 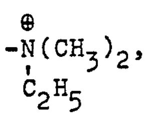

$-\overset{\oplus}{N}(C_3H_7)_3$, $-\overset{\oplus}{N}(C_4H_9)_3$, 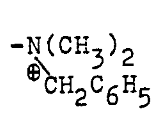

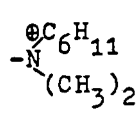 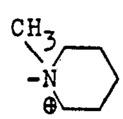 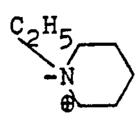 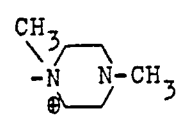 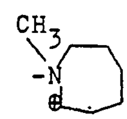

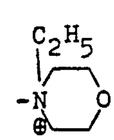 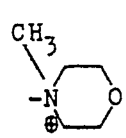 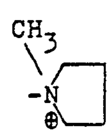 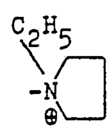

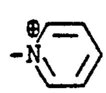 , 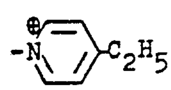 , 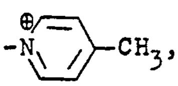 , 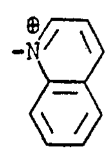 ,

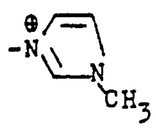 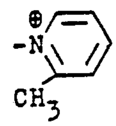

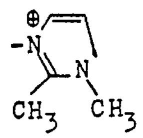 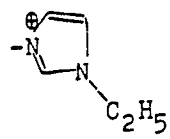 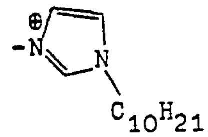

oder

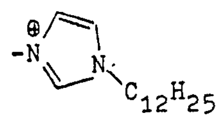

Als Anionen $A^{\ominus}$ kommen z. B. in Betracht:

Chlorid, Bromid, Nitrat, Rhodanid, Formiat, Acetat, Propionat, 2-Ethylhexanoat, Oleat, Benzol-, Toluol-, Octylbenzol- oder Dodecylbenzolsulfonat.

Zur Herstellung der Verbindungen der Formel I kann man z. B. Verbindungen der Formel II

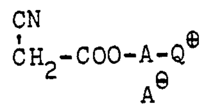 (II)

mit Verbindungen der Formel III

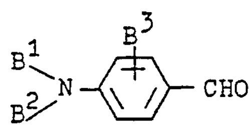 (III)

nach an sich bekannten Methoden umsetzen. Einzelheiten der Herstellung können den Beispielen entnommen werden, in denen sich Angaben über Teile und Prozente, sofern nicht anders vermerkt, auf das Gewicht beziehen.

Die Verbindungen der Formel I sind gelb und haben mit geigneten Anionen, z. B. als Chlorid, Nitrat, Dodecylbenzolsulfonat oder Acetat, eine gute Löslichkeit in hydroxylgruppenhaltigen Lösungsmitteln, wie Alkoholen, Glykolen, Glykolethern oder Wasser; insbesondere seien ethanol, Isopropanol und Ethylenglykolmonoethylether genannt.

Die Verbindungen der Formel I eignen sich daher vorzugsweise als Farbstoffe für Druckfarben auf der Basis dieser Lösungsmittel, die Wasser enthalten können.

Einige der Farbstoffe haben eine hohe Wasserlöslichkeit und sind in dieser Form für die Anwendung im Druck nicht geeignet. Zur Erhöhung der Wasserechtheit sind in diesen Fällen Tannine und synthetische höhermolekulare Harze (Verlackungsmittel) anwendbar, z. B. die in der europäischen Patentschrift 0 001 239 und der dort zitierten Literatur beschriebenen. Die Farbstoffe der Formel I sind mit diesen Verlackungsmitteln in alkoholischen Lösungen gut verträglich, d. h. sie fallen aus diesen Lösungen nicht in Form schwerlöslicher Niederschläge aus.

In vielen Fällen werden nämlich bei der Herstellung von alkoholischen Druckfarben Harze mitverwendet, wie sie z. B. in den « Lackrohstoff-Tabellen », E. Karsten, Curt R. Vincentz Verlag, 7. Auflage, 1981, unter alkohollöslichen Lacken aufgeführt sind. In erster Linie handelt es sich um maleinsäuremodifizierte Kolophoniumharze, sauer modifizierte Ketonharze und Formaldehyd-Phenolharze.

Bei Verbindungen der Formel I, die als Anionen Reste organischer Säuren mit höherem Molekulargewicht enthalten, z. B. Dodecylbenzolsulfonsäure oder 2-Ethylhexansäure, ist der Zusatz eines Verlackungsmittels meistens nicht mehr notwendig.

Als Substrate für den Flexodruck seien beispielsweise genannt: Pergaminpapiere, Wachsrohpapiere, Natronkraftpapiere, Tissuepapiere, Aluminiumfolie und Zellglas.

Von besonderer Bedeutung sind Verbindungen der Formel I, bei denen $B^1$ und $B^2$ Methyl oder Ethyl, ein Rest auch Benzyl, $B^3$ Wasserstoff und A ein Rest der Formel $-CH_2CH_2-$ oder $-CH_2CHCH_3$ sind und $A^{\ominus}$ und Q die angegebene Bedeutung haben.

Bevorzugte Reste Q sind z. B.:

$-\overset{\oplus}{N}(CH_3)_3$, $-\overset{\oplus}{N}(C_2H_5)_3$, 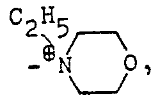, 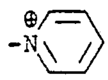 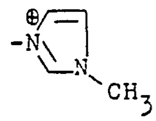 oder 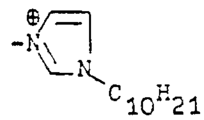

Verbindungen der allgemeinen Formel IV

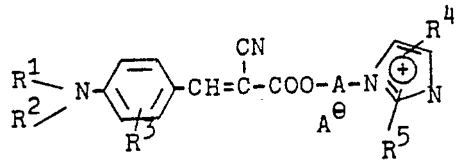 (IV)

in der

$R^1$ und $R^2$ unabhängig voneinander $C_1$- bis $C_4$-Alkyl,
$R^3$ Wasserstoff, Methyl, Ethyl, Methoxy, Ethoxy oder Chlor,
$R^4$ $C_1$- bis $C_{12}$-Alkyl und
$R^5$ Wasserstoff, Methyl oder Ethyl sind und
A und $A^{\ominus}$ die angegebene Bedeutung haben, sind neu.

Reste $R^1$ und $R^2$ sind z. B. Propyl oder Butyl und insbesondere Methyl oder Ethyl. Reste $R^4$ sind beispielsweise Methyl, Ethyl, n- oder i-Propyl, n- oder i-Butyl, Hexyl, Octyl, i-Octyl, Decyl oder Dodecyl.

Von besonderer Bedeutung sind dabei Verbindungen der Formel IV, in der
$R^1$ und $R^2$ Methyl oder Ethyl,
$R^3$ Wasserstoff,
A $-C_2H_4-$ oder $-CH_2\underset{|}{C}H-CH_3$ und
$R^5$ Wasserstoff Methyl oder Ethyl sind und
$R^4$ und $A^{\ominus}$ die angegebene Bedeutung haben.

Beispiel 1

164,2 Teile 1-Methylimidazol, 161 Teile 2-Chlorethanol und 100 Teile i-Butanol werden 3 Stunden unter Rückfluß gekocht. Dann wird das Lösungsmittel abdestilliert, indem man bis auf 140 °C erwärmt und unter vermindertem Druck noch 1 Stunde bei dieser Temperatur rührt. Man erhält 317 Teile 1-Methyl-3-hydroxyethyl-imidazoliumchlorid.

(Erstarrungspunkt 83 °C).

51 Teile Cyanessigsäure und 200 Teile Essigsäureanhydrid werden 2 Stunden bei 35 °C gerührt und dann mit 120 Teilen 1-Methyl-3-hydroxyethyl-imidazoliumchlorid versetzt. Man hält eine Stunde bei 50 °C, setzt 106 Teile p-Diethylaminobenzaldehyd zu und erwärmt dann auf 90 °C. Nach 6 Stunden wird das Lösungsmittel bei vermindertem Druck abdestilliert. Der Farbstoff der Formel

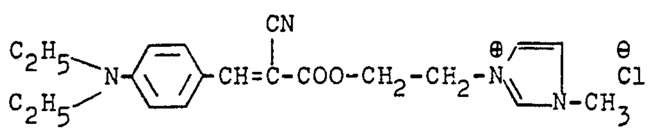 ,

der so erhalten wird, liefert nach Zugabe von 250 Teilen Ethanol eine Flüssigeinstellung, die als Flexofarbe brillante, gelbe Druck ergibt.

Mit den entsprechenden Ausgangsstoffen erhält man wie in Beispiel 1 beschrieben die folgenden Farbstoffe der Formel I:

| Beispiel | $B^1$ | $B^2$ | $B^3$ | A | Q | $A^{\ominus}$ |
|---|---|---|---|---|---|---|
| 2 | $CH_3$ | $CH_3$ | H | $CH_2CH_2$ | 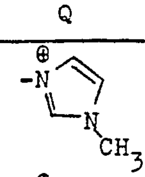 | Cl |
| 3 | $C_2H_5$ | $C_2H_5$ | " | " | 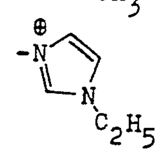 | " |

(Fortsetzung)

| Beispiel | $B^1$ | $B^2$ | $B^3$ | A | Q | $A^{\ominus}$ |
|---|---|---|---|---|---|---|
| 4 | " | " | " | " | 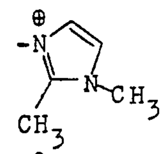 | " |
| 5 | " | " | " | " | 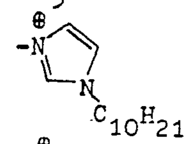 | " |
| 6 | $CH_3$ | $CH_2C_6H_5$ | " | " | 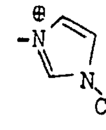 | " |
| 7 | $C_2H_5$ | $C_2H_5$ | " | $CH_2-\underset{\mid}{CH}$ $CH_3$ | 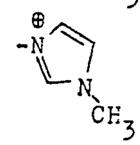 | " |
| 8 | " | " | " | $CH_2CH_2$ | 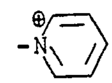 | " |
| 9 | $CH_3$ | $CH_3$ | " | " | $-\overset{\oplus}{N}(CH_3)_3$ | " |
| 10 | " | " | " | " | $-\overset{\oplus}{N}(CH_3)_2(CH_2C_6H_5)$ | " |
| 11 | " | " | " | " | $\overset{\oplus}{N}(C_2H_5)_2CH_3$ | " |
| 12 | " | " | " | " | $\overset{\oplus}{N}(C_2H_5)_3$ | " |
| 13 | " | " | " | " | $\overset{\oplus}{N}(C_4H_9)_3$ | " |
| 14 | $C_2H_5$ | $C_2H_5$ | " | " | 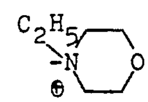 | " |
| 15 | " | " | " | " | 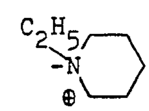 | " |

Beispiel 16

50 Teile des nach Beispiel 2 hergestellten Farbstoffs werden in 500 Teilen Wasser gelöst. Dann tropft man eine Lösung von 60 Teilen Natrium-dodecylbenzol-sulfonat in wenig Wasser zu. Der entstehende Niederschlag wird abgesaugt, mit Wasser gewaschen und getrocknet. Der Farbstoff der Formel

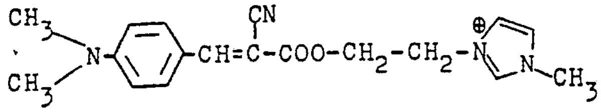 $H_{25}C_{12}-C_6H_4-SO_3^{\ominus}$

eignet sich für die Herstellung gelber Flexodruckfarben.

Setzt man anstelle von Natrium-dodecylbenzolsulfonat Natriumnitrat ein, so erhält man das

Farbstoffnitrat. Mit Natrium-2-ethylhexanoat erhält man das Farbstoff-2-ethylhexanoat, mit Natriumrhodanid das Farbstoffrhodanid.

Beispiel 17

25 g der 60 %igen Lösung eines Verlackungsmittels auf Basis Formaldehyd/Salicylsäure in Ethylalkohol werden mit 6 g Ethylglykol und 10 g des Farbstoffs gemäß Beispiel 1 versetzt. Einige Tropfen dieses Gemisches werden mit einer Rakel auf ein Pergaminpapier aufgebracht. Die Aufrakelung ergibt einen Farbstoffilm von hoher Brillanz und guten Naßechtheiten (nach DIN 16 524, Blatt 1).

Beispiel 18

Auf einer Flexodruckmaschine mit Heißluft-Trockenaggregaten werden bei einer Druckgeschwindigkeit von 300 m/min Drucke auf weißem Pergaminpapier angefertigt. Als Farbstoff wird eine Lösung aus 2 Teilen des Farbstoffes gemäß Beispiel 3, 4 Teilen eines Verlackungsmittels auf Basis Formaldehyd/Salicylsäure und 3 Teilen Ethylglykol in 100 Teilen 96 %igem Ethylalkohol verwendet. Die Drucke zeigen gute Wasserechtheiten.

Beispiel 19

Aus einigen Tropfen einer Lösung von 10 g des Farbstoffs gemäß Beispiel 16, Absatz 1, und 15 g Ethylglykol in 1 000 g 96 %igem Ethanol wird auf Natronkraftpapier mittels einer feinen Rakel (6 mm) ein Farbstoffilm gebildet. Nach dem Trocknen ergibt die Prüfung nach DIN 16524, Blatt 1, eine gute Wasserechtheit.

Beispiel 20

Die Versuchsdurchführung in Beispiel 19 wird wiederholt unter Zusatz von 20 g eines Verlackungsmittels auf Basis Formaldehyd/Salicylsäure. Gegenüber Beispiel 19 tritt keine entscheidende Verbesserung der Wasserechtheit mehr ein.

Beispiel 21

Auf einer Flexodruckmaschine mit Heißlufttrockenaggregaten werden bei einer Druckgeschwindigkeit von 250 m/min Drucke auf Natronkraftzellstoffpapiere angefertigt. Als Druckfarbe wird eine Lösung von 10 Teilen Farbstoff gemäß Beispiel 14 und 10 Teilen Tannin in einem Gemisch aus 40 Teilen Ethylalkohol und 40 Teilen Wasser verwendet. Man erhält Drucke mit guter Wasserechtheit und von hoher Brillanz.

**Anspruch**

Verwendung von Verbindungen der allgemeinen Formel

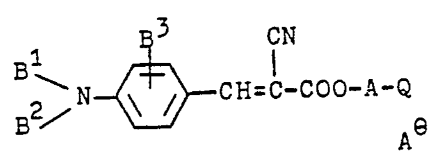

(I)

in der

$B^1$ und $B^2$ unabhängig voneinander gegebenenfalls substituierte Alkylreste,
$B^3$ Wasserstoff, Methyl, Ethyl, Methoxy, Ethoxy oder Chlor,
A einen Alkylenrest,
$A^{\ominus}$ ein Anion und
Q einen quaternierten stickstoffhaltigen Rest bedeuten, in Druckfarben.

**Claim**

The use of a compound of the general formula

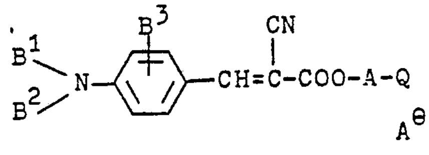

(I)

where

$B^1$ and $B^2$ independently of one another are unsubstituted or substituted alkyl,

$B^3$ is hydrogen, methyl, ethyl, methoxy, ethoxy or chlorine,

A is alkylene,

$A^{\ominus}$ is an anion, and

Q is a quaternary nitrogen-containing radical, in printing inks.

**Revendication**

Utilisation, dans des encres d'imprimerie, de composés de formule générale

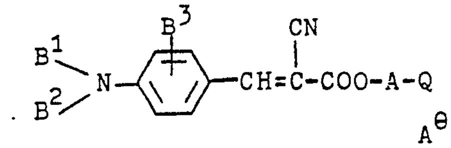

(I)

dans laquelle

$B^1$ et $B^2$ représentent, indépendamment l'un de l'autre, des radicaux alcoyle éventuellement substitués,

$B^3$ est un hydrogène, un méthyle, un éthyle, un méthoxy, un éthoxy ou un chlore,

A est un radical alcoylène,

$A^{\ominus}$ est un anion et

Q est un radical azoté mis sous forme quaternaire.